(19) Europäisches Patentamt

European Patent Office

Office européen des brevets

(11) **EP 1 558 355 B1**

(12) **FASCICULE DE BREVET EUROPEEN**

(45) Date de publication et mention
de la délivrance du brevet:
**19.04.2006 Bulletin 2006/16**

(21) Numéro de dépôt: **03767859.6**

(22) Date de dépôt: **29.10.2003**

(51) Int Cl.:
*B01D 15/02* (2006.01)

(86) Numéro de dépôt international:
**PCT/FR2003/003227**

(87) Numéro de publication internationale:
**WO 2004/039468 (13.05.2004 Gazette 2004/20)**

(54) **PROCEDE ET DISPOSITIF DE CHROMATOGRAPHIE INTEGRANT UNE ETAPE DE CONCENTRATION**

CHROMATOGRAPHIE-VERFAHREN UND VORRICHTUNG WELCHE EINEN KONZENTRATIONS-SCHRITT INTEGRIEREN

METHOD AND DEVICE FOR CHROMATOGRAPHY COMPRISING A CONCENTRATION STEP

(84) Etats contractants désignés:
**AT BE BG CH CY CZ DE DK EE ES FI FR GB GR HU IE IT LI LU MC NL PT RO SE SI SK TR**

(30) Priorité: **29.10.2002 FR 0213536**

(43) Date de publication de la demande:
**03.08.2005 Bulletin 2005/31**

(73) Titulaire: **Novasep**
**54340 Pompey (FR)**

(72) Inventeurs:
• **BAILLY, Michel**
  **F-54000 Nancy (FR)**
• **NICOUD, Roger-Marc**
  **F-54690 Lay-St-Christophe (FR)**
• **ADAM, Philippe**
  **F-54320 Maxeville (FR)**
• **LUDEMANN-HOMBOURGER, Olivier**
  **F-54230 Chavigny (FR)**

(74) Mandataire: **Hirsch & Associés**
**58, avenue Marceau**
**75008 Paris (FR)**

(56) Documents cités:
**US-A- 5 387 347          US-A- 5 422 007**
**US-A- 5 434 298**

**Description**

La présente invention concerne un procédé et un dispositif de chromatographie, qui permet une productivité améliorée.

La chromatographie préparative est utilisée comme procédé de purification de mélanges en particulier pharmaceutiques. Par exemple, les procédés de chromatographie actuels peuvent être schématisés comme la séparation de deux ou plusieurs "composants" d'une charge ou mélange à purifier. On obtient, à l'aide d'un solvant et d'un lit chromatographique, deux ou plusieurs fractions. Selon un mode particulier, on produit deux fractions, l'une avec un premier "composant" et l'autre avec un second "composant". Un des deux, et plus rarement les deux, composants est (sont) recherché(s).

On connaît plusieurs techniques de chromatographie à l'échelle industrielle, parmi lesquelles les procédés multicolonnes de type SMB (Simulated Moving Bed ou Lit Mobile Simulé) et VARICOL®.

Le procédé de SMB fait appel à la simulation d'un contre-courant d'un lit et de fluide, notamment par application de la technologie initialement développée par UOP (US-P-2985589 ; US-P-3291726 et US-P-3266604). Ainsi, les points d'injection de la charge et de l'éluant sont déplacés périodiquement, de même que les points de soutirage de l'extrait et du raffinat. Le déplacement est synchrone, ce qui fait que les différents points d'alimentation et de soutirage sont déplacés de manière simultanée.

Le procédé VARICOL®, procédé fondamentalement différent du SMB, utilise des déplacements asynchrones des différents points d'alimentation et de soutirage. On rappellera que ce dispositif et procédé associé sont décrits notamment dans le document WO-A-0025885. Ce document décrit un procédé de séparation d'au moins un composant d'un mélange le contenant, dans un dispositif présentant un ensemble de colonnes chromatographiques ou tronçons de colonnes chromatographiques contenant un adsorbant, montés en série et en boucle, la boucle comportant au moins un point d'une injection de charge, un point d'un soutirage de raffinat, un point d'une injection d'un éluant et un point d'un soutirage d'extrait, dans lequel on détermine entre un point d'injection et un point de soutirage ou vice-versa une zone chromatographique, le procédé étant caractérisé en ce qu'au bout d'une période de temps donné, l'ensemble des points d'injection et de soutirage se trouvent décalés d'un même nombre de colonnes ou tronçons de colonne, avantageusement d'une colonne ou tronçon de colonne, dans une direction donnée définie par rapport à celle de l'écoulement d'un fluide principal circulant à travers la boucle et en ce que, au cours de ladite période, on effectue le décalage des différents points d'injection et de soutirage à des temps différents de manière que la longueur des zones définies par lesdits différents points soit variable.

Les deux techniques ci-dessus font appel à un procédé multicolonnes, dont la performance est le facteur limitant en tant que procédé compétitif vis-à-vis de techniques de purification classiques (par ex. cristallisation, extraction, etc.).

En outre, la productivité d'un procédé chromatographique est généralement limitée par la capacité du support chromatographique (nombre de sites d'adsorption du support). La plupart des applications en chromatographie préparative impliquent l'utilisation de conditions d'injection pour lesquelles les effets de surcharge se font ressentir: la quantité injectée est maximisée jusqu'à ce que les effets de saturation du support limitent la séparation des espèces injectées.

Il existe donc un besoin d'améliorer la performance des systèmes multicolonnes, soit par une productivité supérieure pour une pureté identique des produits purifiés ou par une pureté supérieure des produits avec une quantité injectée identique.

US-P-5387347 décrit un procédé multicolonnes mettant en oeuvre une étape de concentration. Cette étape implique un soutirage d'une partie du liquide circulant correspondant à au moins le double du débit de la charge. Ce soutirage (sans réinjection) est mis en oeuvre immédiatement avant l'injection de la charge.

Rien dans ce document n'enseigne ni ne suggère l'invention.

L'invention a donc pour objet un procédé de séparation par chromatographie multicolonnes produisant au moins deux fractions, comprenant les étapes suivantes, en sortie de la zone d'extrait, zone I, ou de raffinat, zone III : (i) on soutire au moins une partie du flux de sortie de ladite zone ; (ii) on concentre cette partie ; et (iii) on réinjecte au moins partiellement la partie concentrée.

Selon un mode de réalisation, on soutire la totalité du flux de sortie de ladite zone.

Selon un mode de réalisation, on réinjecte partiellement la partie concentrée.

Selon une variante, on réinjecte entre 50 et 99.5 % de la partie concentrée, de préférence entre 70 et 98 %.

Selon une variante, on réinjecte totalement la partie concentrée.

Selon un mode de réalisation, le facteur de concentration F est compris entre 1.1 et 10, de préférence entre 1.25 et 5.

Selon un mode de réalisation préféré, le soutirage est effectué en aval de la zone d'extrait, zone I.

Selon une variante, la séparation par chromatographie est du type SMB.

Selon une autre variante, la séparation par chromatographie est du type VARICOL.

L'invention a également pour objet un dispositif de chromatographie comprenant: (i) une pluralité de colonnes de séparation; (ii) un point de soutirage en sortie desdites colonnes pour soutirer au moins une partie du flux de sortie d'une colonne ; (iii) un dispositif de concentration de ladite partie ; et (iv) un point de réinjection immédiatement après le point de soutirage pour réinjecter au moins partiellement la partie concentrée.

Selon un mode de réalisation, le dispositif comprend une vanne entre les points de soutirage et de réinjection.

Selon un mode de réalisation, le dispositif comprend une collecte partielle de la partie concentrée.

Selon un mode de réalisation, le dispositif de concentration est un évaporateur.

Selon une variante, la pluralité de colonnes de séparation est du type SMB.

Selon une autre variante, la pluralité de colonnes de séparation est du type VARICOL.

Le dispositif selon l'invention est adapté pour la mise en oeuvre du procédé selon l'invention.

D'autres caractéristiques et avantages de l'invention vont maintenant être décrits en détail dans l'exposé qui suit et qui est donné en référence aux figures annexées dans lesquelles :

- la figure 1 représente schématiquement un procédé chromatographique continu à contre-courant réel : le Lit Mobile vrai.
- la figure 2 représente schématiquement un dispositif selon l'invention.

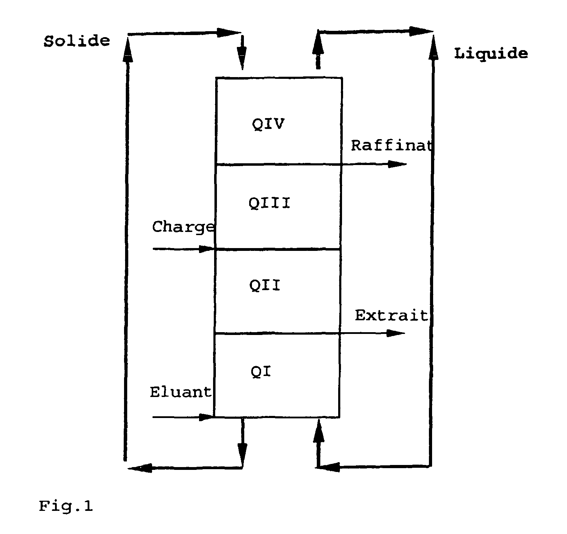

En référence à la figure 1, on décrit le procédé classique à contre-courant 4 zones, à savoir le Lit Mobile Vrai. Selon ce principe, les solides tournent continûment dans une boucle fermée, entre des points fixes d'introduction de charge et d'éluant et de soutirage d'extrait et de raffinat. On distingue alors les 4 zones suivantes :

- Zone 1 : Tout ce qui se situe entre les lignes d'éluant et d'extrait ;
- Zone 2 : Tout ce qui se situe entre les lignes d'extrait et de charge ;
- Zone 3 : Tout ce qui se situe entre les lignes de charge et de raffinat ; et
- Zone 4 : Tout ce qui se situe entre les lignes de raffinat et d'éluant.

Le débit de solide est constant dans tout le système, mais, du fait des débits d'entrées/sorties, le débit de liquide varie selon la zone : $Q_I$, $Q_{II}$, $Q_{III}$ et $Q_{IV}$ étant les débits respectifs dans les zones I, II, III et IV.

Le principe du Lit Mobile Simulé, rappelé brièvement supra, opère par déplacement des points d'entrée et de sortie à intervalles fixes dans un système multicolonnes Ce procédé est défini par les principales caractéristiques suivantes :

1. des zones définies par la position des lignes entrées/sorties ;
2. un nombre fixé de colonnes par zone ;
3. des zones de longueur fixée ; et
4. un déplacement synchronisé de toutes les lignes entrées/sorties.

(Les caractéristiques 2, 3 et 4 sont dues au fait que le Lit Mobile Simulé simule le comportement du Lit Mobile Vrai).

Dans le procédé dit VARICOL®, l'idée de base est de modifier le Lit Mobile Vrai présenté supra dans le but de permettre une variation de la longueur de zones dans le temps.

Contrairement au Lit Mobile Vrai, les longueurs de zone ne sont plus fixes mais varient dans le temps. Dans un mode de réalisation, ces variations peuvent être périodiques de manière à ce que le système retrouve sa position initiale après un temps donné. (A cause de la variation de la longueur de la zone, à l'inverse du Lit Mobile Vrai, ce système n'est pas stationnaire et la vitesse du solide n'est pas constante par rapport aux lignes d'entrées/sorties).

Lors de la mise en oeuvre d'un procédé VARICOL®, les longueurs de zones oscillent continuellement d'une colonne, l'augmentation de la longueur d'une zone étant compensée par la diminution de la suivante. Pour d'autres mises en oeuvre, l'augmentation de longueur d'une zone peut par exemple être compensée par la diminution de la zone opposée, mais d'autres réalisations sont possibles.

Les différences du système VARICOL® par rapport au procédé du Lit Mobile Simulé sont alors :

1. les longueurs de zone ne sont pas constantes ;
2. le nombre des colonnes par zone n'est pas constant dans le temps ;
3. les lignes d'entrées/sorties ne sont pas déplacées simultanément ;
4. le débit de solide simulé par le procédé VARICOL® n'est pas constant par rapport aux lignes d'entrées/sorties.

Comme expliqué, une mise en oeuvre préférée du procédé VARICOL est périodique (période $\Delta t$), afin qu'après un temps donné, le système retrouve sa configuration initiale. Pendant cette période, le nombre de colonnes dans chaque zone a été varié, et à des fins de commodité, il peut être utile de définir un nombre moyen de colonnes par zone :

*<Nb1>* = nombre moyen de colonnes contenu dans la zone I pendant une période
*<Nb2>* = nombre moyen de colonnes contenu dans la zone 2 pendant une période
*<Nb3>* = nombre moyen de colonnes contenu dans la zone 3 pendant une période
*<Nb4>* = nombre moyen de colonnes contenu dans la zone 4 pendant une période.

De même un système de Lit Mobile Simulé peut être présenté par :

SMB: *Nb1*/*Nb2*/*Nb3*/*Nb4*

On peut représenter le VARICOL® par :

VARICOL® *<Nb1>*/*<Nb2>*/*<Nb3>*/*<Nb4>*

(Cependant, alors que le nombre de colonnes par zone a une réelle signification pour les systèmes SMB, les nombres moyens (habituellement non entiers) n'ont aucune signification technique et sont simplement utilisés par commodité pour le procédé VARICOL).

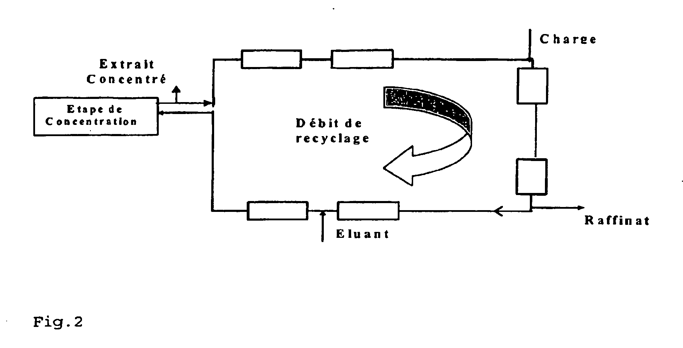

En référence à la figure 2, on décrit un dispositif comprenant 6 colonnes. Les zones I, II, III et IV sont définies entre les différents points d'injection et de soutirage, comme indiqué supra. Le dispositif selon l'invention comprend une ouverture de la boucle de colonnes. On pourrait aussi n'avoir qu'une ouverture de boucle partielle. Ceci peut être géré à l'aide par exemple d'une vanne située entre les points de soutirage et d'injection.

Le flux collecté en sortie de la colonne située en amont du point d'ouverture de la boucle est concentré de manière continue ou discontinue, par exemple par un procédé d'évaporation. La solution concentrée est alors partiellement (par exemple entre 50 et 99.5 %, de préférence 70 à 98 %) ou totalement réinjectée à l'entrée de la colonne en aval du point d'ouverture. Ce point d'ouverture est commuté régulièrement afin de conserver la même position relativement aux zones du procédé. Le taux de réinjection est défini par rapport aux fractions. L'ouverture de la boucle en vue d'effectuer une concentration peut également être appliquée aux procédés multicolonnes possédant déjà une ouverture de boucle en un point quelconque.

Selon la méthode de concentration utilisée, le flux collecté, concentré et réinjecté peut nécessiter un réajustement de sa composition en éluant (par exemple si celui-ci n'est pas un solvant pur).

Dans le cas de la figure 2, l'ouverture est en aval de la zone I. Ce mode de réalisation est avantageux, notamment dans le cas particulier d'une isotherme d'adsorption de type Langmuir présentant un effet de saturation compétitif du nombre de sites du support chromatographique. Le flux collecté est alors concentré et partiellement réinjecté sur la colonne en aval (entrée de la zone II). La fraction du flux concentré qui n'est pas réinjectée est collectée : elle correspond à de l'extrait concentré (produit le plus retenu purifié).

Dans le cas représenté (ouverture de boucle en aval de la zone I), le nouveau procédé est caractérisé par le taux de concentration du flux concentré collecté F :

- F=$C_{extconc}$/$C_{outZoneI}$ ($C_{extconc}$ et $C_{outZoneI}$ étant les concentrations de l'extrait concentré collecté et du flux de sortie de la zone I, respectivement). ($C_{extconc}$ est aussi la concentration du flux d'injection de la zone II).
- Les débits d'éluant, de charge et de raffinat : $Q_{elu}$, $Q_{feed}$ et $Q_{raf}$, respectivement (le débit d'extrait dans un procédé classique serait $Q_{ext}$).
- Le débit en entrée de la zone II, $Q_{II}$.
- Le débit en sortie de la zone I, $Q_I$.

Le débit d'extrait concentré collecté ($Q_{extconc}$) est alors donné par le bilan matière sur le procédé, comme suit :

$$Q_{extconc} = (Q_{elu} + Q_{feed} - Q_{raf})/F + Q_{II}*(1/F-1)$$

(ou aussi $Q_{extconc} = Q_I/F - Q_{II}$)

Le taux T de réinjection indiqué plus haut est donné par la formule :

$$T = (Q_{II}*F)/Q_I$$

(ou aussi $T = 1 - (Q_{extconc}*F)/Q_I$)

Ce facteur F peut varier entre 1.1 et 10, de préférence entre 1.25 et 5.

Le procédé proposé permet la séparation de mélanges binaires. Il est donc particulièrement adapté aux séparations d'énantiomères ou à toute autre application destinée à séparer un mélange de deux espèces.

Le procédé peut également s'appliquer à des mélanges de plus de deux espèces. Le mélange est alors séparé en deux fractions à chaque étape dans le nouveau procédé. En fonction des besoins, plusieurs étapes de purification, par le nouveau procédé ou par un autre procédé, peuvent être mises en oeuvre.

Le procédé selon l'invention est généralement continu ; les débits cités ci-dessus sont constants au cours du temps.

Dans certains cas, on peut être amené à réduire ou à stopper pendant une fraction de la période le débit d'extrait ou de raffinat en diminuant simultanément le débit d'éluant. Ceci peut être réalisé lorsque :

- la ligne d'injection d'éluant et de soutirage d'extrait sont situés au même point (nombre de colonne en zone I temporairement nul, ce qui peut se produire lorsque le nombre de colonnes est faible et que le décalage des lignes d'alimentation et de soutirage est réalisé de manière asynchrone, dans le cas du procédé VARICOL®) : la collecte d'extrait peut alors être réduite ou stoppée et le débit d'éluant diminué de la même quantité ;
- la ligne d'injection d'éluant et de soutirage de raffinat sont situés au même point (nombre de colonnes en zone IV temporairement nul) : la collecte de raffinat peut être réduite ou stoppée et le débit d'éluant diminué de la même quantité.

Ceci permet dans certains cas de diminuer la dilution des collectes et de réduire ainsi la consommation d'éluant du procédé (volume de solvant mis en jeu pour purifier une quantité donnée de produit).

De façon classique, l'éluant utilisé dans le procédé peut être un liquide, un fluide supercritique ou subcritique ou un gaz comprimé.

Le présent procédé s'applique à tout type de procédé chromatographique, y compris ceux couplant réaction et séparation. Un exemple d'un tel procédé est décrit dans la demande US2001/0031903A1.

Les exemples suivants illustrent la présente invention sans toutefois en limiter la portée.

Exemple 1.

La séparation des énantiomères du Kétoprofène a été réalisée d'une part en SMB, et d'autre part avec le procédé selon l'invention. On a montré que le nouveau procédé permet soit d'obtenir de meilleures puretés à productivité constante, soit d'augmenter la productivité à puretés constantes.

La séparation est effectuée sur un pilote multicolonnes continu utilisant 6 colonnes 0 1x10 cm remplies de ChiralCel OJ 20$\mu$m (Daicel). L'éluant est un mélange hexane/IPA/acide acétique 90/10/0.5 % v/v.

La solubilité du racémique dans l'éluant est d'environ 25 g/l à température ambiante.

La séparation a lieu à 25°C, une pureté optique de 99 % est visée à l'extrait et au raffinat.

La répartition des colonnes, que ce soit en SMB ou dans le procédé selon l'invention, est la suivante :

- 1 colonne en zone I,
- 2 colonnes en zone II,
- 2 colonnes en zone III,
- 1 colonne en zone IV.

Performances obtenues en SMB.

Les conditions sont indiquées dans le tableau ci-dessous.

| Conc charge (g/l) | $Q_{feed}$ (ml/min) | $Q_{elu}$ (ml/min) | $Q_{ext}$ (ml/min) | $Q_{raf}$ (ml/min) | $Q_I$ (ml/min) |
|---|---|---|---|---|---|
| 25 | 0.74 | 23.81 | 18.10 | 6.44 | 38.54 |

La période de commutation est 1.07 minutes.

Les puretés optiques obtenues sont 99.0 % à l'extrait et 95.3 % au raffinat pour une productivité de 26.6 g de racémique injecté par jour.

Performances obtenues avec le procédé selon l'invention.

Cas A.

Les conditions sont indiquées dans le tableau ci-dessous (le débit de recyclage n'est plus indiqué, puisque la boucle est ouverte).

| Conc charge (g/l) | $Q_{feed}$ (ml/min) | $Q_{elu}$ (ml/min) | F | $Q_{raf}$ (ml/min) | $Q_{II}$ (ml/min) |
|---|---|---|---|---|---|
| 25 | 0.74 | 23.80 | 1.90 | 4.49 | 18.50 |

La période de commutation est 1.07 minutes.
Les puretés optiques obtenues sont 99.4 % à l'extrait et 98.4 % au raffinat pour une productivité de 26.6 g de racémique injecté par jour. On observe donc une amélioration à la fois de la pureté de l'extrait et de celle du raffinat par rapport au procédé SMB optimisé pour une même productivité.

Cas B .

Les conditions sont indiquées dans le tableau ci-dessous.

| Conc charge (g/l) | $Q_{feed}$ (ml/min) | $Q_{elu}$ (ml/min) | F | $Q_{raf}$ (ml/min) | $Q_{II}$ (ml/min) |
|---|---|---|---|---|---|
| 25 | 1.13 | 23.79 | 1.89 | 3.77 | 19.26 |

La période de commutation est 0.95 minutes.
Les puretés optiques obtenues sont 99.1 % à l'extrait et 95.50 % au raffinat pour une productivité de 40.7 g de racémique injecté par jour. On observe donc une augmentation de productivité de 50 % par rapport au procédé SMB, tout en ayant une légère augmentation de la pureté du raffinat.
Le tableau suivant résume les débits dans les différentes zones.

| Débit | SMB | Cas A | Cas B |
|---|---|---|---|
| $Q_I$ | 38.54 | 38.54 | 40.41 |
| $Q_{II}$ | 20.44 | 18.50 | 19.26 |
| $Q_{III}$ | 21.18 | 19.24 | 20.39 |
| $Q_{IV}$ | 14.74 | 14.75 | 16.62 |
| $Q_{extconc}$ | | 1.77 | 2.13 |
| T | | 91 | 90 |

**Revendications**

1. Procédé de séparation par chromatographie multicolonnes produisant au moins deux fractions, comprenant les étapes suivantes, en sortie de la zone d'extrait, zone I, ou de raffinat, zone III :

    (i) on soutire au moins une partie du flux de sortie de ladite zone ;
    (ii) on concentre cette partie ; et
    (iii) on réinjecte au moins partiellement la partie concentrée.

2. Procédé selon la revendication 1, dans lequel on soutire la totalité du flux de sortie de ladite zone.

3. Procédé selon la revendication 1 ou 2, dans lequel on réinjecte partiellement la partie concentrée.

4. Procédé selon la revendication 3, dans lequel on réinjecte entre 50 et 99.5 % de la partie concentrée, de préférence entre 70 et 98 %.

**5.** Procédé selon la revendication 1 ou 2, dans lequel on réinjecte totalement la partie concentrée.

**6.** Procédé selon l'une des revendications 1 à 5, dans lequel le facteur de concentration F est compris entre 1.1 et 10, de préférence entre 1.25 et 5.

**7.** Procédé selon l'une des revendications 1 à 6, dans lequel le soutirage est effectué en aval de la zone d'extrait, zone I.

**8.** Procédé selon l'une des revendications 1 à 7, **caractérisé en ce que** la séparation par chromatographie est du type SMB.

**9.** Procédé selon l'une des revendications 1 à 7, **caractérisé en ce que** la séparation par chromatographie est du type VARICOL.

**10.** Dispositif de chromatographie comprenant :

(i) une pluralité de colonnes de séparation ;
(ii) un point de soutirage en sortie desdites colonnes pour soutirer au moins une partie du flux de sortie d'une colonne ;
(iii) un dispositif de concentration de ladite partie ;
(iv) un point de réinjection immédiatement après le point de soutirage pour réinjecter au moins partiellement la partie concentrée.

**11.** Dispositif selon la revendication 10, comprenant une vanne entre les points de soutirage et de réinjection.

**12.** Dispositif selon la revendication 10 ou 11, comprenant une collecte partielle de la partie concentrée.

**13.** Dispositif selon l'une des revendications 10 à 12, dans lequel le dispositif de concentration est un évaporateur.

**14.** Dispositif selon l'une des revendications 10 à 13, **caractérisé en ce que** la pluralité de colonnes de séparation est du type SMB.

**15.** Dispositif selon l'une des revendications 10 à 13, **caractérisé en ce que** la pluralité de colonnes de séparation est du type VARICOL.

**16.** Dispositif selon l'une des revendications 10 à 15, pour la mise en oeuvre du procédé selon l'une des revendications 1 à 9.

**Claims**

**1.** Method for separation by multi-column chromatography producing at least two fractions, comprising the following stages, at the outlet of the extraction zone, zone I, or the raffinate zone, zone III:

(i) at least a part of the flow leaving said zone is drawn off;
(ii) this part is concentrated; and
(iii) the concentrated part is at least partially re-injected.

**2.** Method according to claim 1, in which all of the flow leaving said zone is drawn off.

**3.** Method according to claim 1 or 2, in which the concentrated part is partially re-injected.

**4.** Method according to claim 3, in which between 50 and 99.5 % of the concentrated part, preferably between 70 and 98 % is re-injected.

**5.** Method according to claim 1 or 2, in which the concentrated part is totally re-injected.

**6.** Method according to one of claims 1 to 5, in which the concentration factor F is comprised between 1.1 and 10, preferably between 1.25 and 5.

**7.** Method according to one of claims 1 to 6, in which the drawing-off is carried out downstream of the extraction zone, zone I.

**8.** Method according to one of claims 1 to 7, **characterized in that** the separation by chromatography is of the SMB type.

**9.** Method according to one of claims 1 to 7, **characterized in that** the separation by chromatography is of the VARICOL TYPE.

**10.** Chromatography apparatus comprising:

(i) a plurality of separation columns;
(ii) a drawpoint at the outlet of said columns to draw off at least a part of the flow leaving a column;

a device for the concentration of said part;
a re-injection point immediately after the drawpoint to re-inject at least partially the concentrated part.

**11.** Apparatus according to claim 10, comprising a valve between the drawpoint and the re-injection point.

**12.** Apparatus according to claim 10 or 11, comprising a partial collection of the concentrated part.

**13.** Apparatus according to one of claims 10 to 12, in which the concentration device is an evaporator.

**14.** Apparatus according to one of claims 10 to 13, **characterized in that** the plurality of separation columns is of the SMB type.

**15.** Apparatus according to one of claims 10 to 13, **characterized in that** the plurality of separation columns is of the VARICOL type.

**16.** Apparatus according to one of claims 10 to 15, for implementing the method according to one of claims 1 to 9.


**Patentansprüche**

**1.** Trennverfahren durch Mehrsäulen-Chromatographie, wobei mindestens zwei Fraktionen erzeugt werden, umfassend die folgenden Schritte am Ausgang der Extraktzone, Zone I, oder Raffinatzone, Zone III:

(i) man zieht mindestens einen Teil des Ausgangsstroms dieser Zone ab;
(ii) man konzentriert diesen Teil; und
(iii) man speist den konzentrierten Teil mindestens partiell wieder ein.

**2.** Verfahren nach Anspruch 1, bei dem man den gesamten Ausgangsstrom dieser Zone abzieht.

**3.** Verfahren nach Anspruch 1 oder 2, bei dem man den konzentrierten Teil partiell wieder einspeist.

**4.** Verfahren nach Anspruch 3, bei dem man zwischen 50 und 99,5 % des konzentrierten Teils, vorzugsweise zwischen 70 und 98 % wieder einspeist.

**5.** Verfahren nach Anspruch 1 oder 2, bei dem man den gesamten konzentrierten Teil wieder einspeist.

**6.** Verfahren nach einem der Ansprüche 1 bis 5, bei dem der Konzentrationsfaktor F zwischen 1,1 und 10, vorzugsweise zwischen 1,25 und 5 beträgt.

**7.** Verfahren nach einem der Ansprüche 1 bis 6, bei dem der Abzug stromab der Extraktzone, Zone I, vorgenommen wird.

**8.** Verfahren nach einem der Ansprüche 1 bis 7, **dadurch gekennzeichnet, dass** die Trennung durch Chromatographie vom Typ SMB ist.

**9.** Verfahren nach einem der Ansprüche 1 bis 7, **dadurch gekennzeichnet, dass** die Trennung durch Chromatographie vom Typ VARICOL ist.

**10.** Chromatographievorrichtung, umfassend:

(i) eine Vielzahl von Trennsäulen;
(ii) einen Abzugspunkt am Ausgang der Säulen zum Abziehen mindestens eines Teils des Ausgangsstroms einer Säule;
(iii) eine Vorrichtung zum Konzentrieren dieses Teils;
(iv) eine Wiedereinspeisungsstelle unmittelbar hinter der Abzugsstelle zum mindestens partiellen Wiedereinspeisen des konzentrierten Teils.

**11.** Vorrichtung nach Anspruch 10, umfassend ein Ventil zwischen den Abzugs- und Wiedereinspeisungsstellen.

**12.** Vorrichtung nach Anspruch 10 oder 11, umfassend eine partielle Sammlung des konzentrierten Teils.

**13.** Vorrichtung nach einem der Ansprüche 10 bis 12, bei der die Konzentriervorrichtung ein Verdampfer ist.

**14.** Vorrichtung nach einem der Ansprüche 10 bis 13, **dadurch gekennzeichnet, dass** die Vielzahl von Trennsäulen vom Typ SMB ist.

**15.** Vorrichtung nach einem der Ansprüche 10 bis 13, **dadurch gekennzeichnet, dass** die Vielzahl von Trennsäulen vom Typ VARICOL ist.

**16.** Vorrichtung nach einem der Ansprüche 10 bis 15 für die Durchführung des Verfahrens nach einem der Ansprüche 1 bis 9.

EP 1 558 355 B1

Solide ──► Liquide

QIV

Raffinat

QIII

Charge

QII

Extrait

QI

Eluant

Fig.1

10

Fig.2